# EUROPEAN PATENT APPLICATION

(11) **EP 1 422 778 A1**
(43) Date of publication of application: **26.05.2004**
(21) Application number: 03256184.7
(22) Date of filing: 30.09.2003
(51) Int. Cl.: H01M 8/06, B01J 19/08, C01B 3/34

(54) **Fuel cells using plasma on the cathode side**

(30) Priority: 28.10.2002 US 282346
(71) Applicant: Hewlett-Packard Development Company, L.P., Houston, TX 77070 (US)
(72) Inventor: Herman, Gregory S., Albany, OR 97321 (US)
(74) Representative: Jackson, Richard Eric

(57) **Abstract**

A fuel cell system includes an anode (24) in fluid communication with a fuel source (34), a cathode (26) in fluid communication with an oxygen source (42), an electrolyte (28) disposed between the anode (24) and the cathode (26), and a first plasma reactor (48) disposed between the cathode (26) and the oxygen source (42).

## Description

### TECHNICAL FIELD

The present invention relates to fuel cells. More particularly, the present invention relates to the use of a plasma to enhance fuel cell operation.

### BACKGROUND

Advances in the development of fuel cells have reached a point at which many speculate that fuel cells will soon compete with the gas turbine generating large amounts of electricity for cities, the internal combustion engine powering automobiles, and batteries that run a variety of small and large electronics. Fuel cells conduct an electrochemical energy conversion of fuel and oxygen into electricity and heat. Fuel cells are similar to batteries, but they can be refueled while providing power.

Fuel cells provide a DC (direct current) voltage that may be used to power motors, lights, or any number of electrical appliances. There are several different types of fuel cells, each using a different chemistry. Fuel cells are usually classified by the type of electrolyte used. The fuel cell types are generally categorized into one of five groups: proton exchange membrane (PEM) fuel cells, alkaline fuel cells (AFC), phosphoric-acid fuel cells (PAFC), solid oxide fuel cells (SOFC), and molten carbonate fuel cells (MCFC).

Fuel cells typically include four basic elements: an anode, a cathode, an electrolyte, and a catalyst arranged on each side of the electrolyte. The anode is the negative post of the fuel cell and conducts electrons that are freed from a fuel (usually hydrogen or a hydrocarbon) such that the electrons can be used in an external circuit. The anode typically includes channels to disperse the fuel gas as evenly as possible over the surface of the catalyst, and remove water and carbon dioxide for oxygen ion conducting electrolytes.

The cathode is the positive post of the fuel cell, and typically includes channels etched therein to evenly distribute an oxidant (usually oxygen contained in air) to the surface of the catalyst. The cathode also conducts the electrons back from the external circuit to the catalyst, where they can recombine with the hydrogen ions and oxygen to form water in the case of proton conducting electrolytes.

The cathode absorbs and dissociates the oxygen molecules. Electrons are transferred from the cathode to the oxygen atoms, and oxygen anions are transferred from a surface of the cathode into the bulk of the cathode and then into the electrolyte for the solid oxide fuel cell. Often, the limiting step in the process of producing electricity by this electrochemical process is the rate of dissociation of the oxygen molecules at the surface of the cathode.

Similarly, at the anode of a solid oxide fuel cell using a hydrocarbon for fuel, it is needed to adsorb the hydrocarbon, strip off the hydrogen atom, and break any carbon-carbon bonds, while preventing coking of the anode. In addition, the hydrogen and carbon then need to react with oxygen ions transported through the electrolyte from the cathode to form water and carbon dioxide, respectively. Accordingly, the hydrocarbon is usually activated by a catalyst at high temperatures such that the species of hydrogen and carbon can more readily dissociate and become oxidized.

The typical fuel cell employs catalysts to activate and dissociate fuel and oxygen sources to facilitate the electrochemical reaction. However, traditional catalysts for solid oxide fuel cells are only active at elevated temperatures and result in large power losses when run at lower temperatures for fuel cell applications that are intended for lower temperature operation (e.g., auxiliary power units, or others that require repeated cycling in temperature). Therefore there has been development of new catalyst materials that are active at lower operating temperatures. The low temperature catalyst materials, however, are expensive to acquire, use, maintain, and still do not meet the needed goals (e.g., stability, performance, direct hydrocarbon fuel feed, etc.).

There has also been some effort to develop anodes and cathodes with specialized microstructures to increase the three-phase boundary and therefore increase catalytic activity. The three-phase boundary is defines as a region in which the fuel (e.g. hydrogen or a hydrocarbon), the electrocatalyst in the anode, and the electrolyte meet. However, such efforts add expense to the fuel cell configuration and are time consuming and difficult to realize. Furthermore, there are limits to how low in temperature these electrocatalyst will still be effective for the electro-oxidation of the fuels and the electro-reduction of the oxygen.

Thus, there is a need in the art for fuel cells that are more efficient and can, in some cases, operate a lower temperatures.

### SUMMARY OF THE INVENTION

In one of many possible embodiments, the present invention provides a fuel cell system that include an anode in fluid communication with a fuel source, a cathode in fluid communication with an oxygen source, an electrolyte disposed between the anode the cathode, and a first plasma reactor disposed between the cathode and the oxygen source. In another embodiment, the present invention provides a method of operating a fuel cell by passing fuel and oxygen through plasmas and providing said fuel and oxygen to said fuel cell.

### BRIEF DESCRIPTION OF THE DRAWINGS

The accompanying drawings illustrate various embodiments of the present invention and are a part of the specification. Together with the following description, the drawings demonstrate and explain the principles of the present invention. The illustrated embodiments are examples of the present invention and do not limit the scope of the invention.

FIG. 1 is a representation of a fuel cell system according to one embodiment of the present invention.

FIG. 2 is a plasma reactor for use in combination with the fuel cell system of FIG. 1 according to one embodiment of the present invention.

FIG. 3 is another plasma reactor for use in combination with the fuel cell system of FIG. 1 according to one embodiment of the present invention.

FIG. 4 is an electronic device according to one embodiment of the present invention.

Throughout the drawings, identical reference numbers designate similar, but not necessarily identical, elements.

### DETAILED DESCRIPTION OF EMBODIMENTS OF THE INVENTION

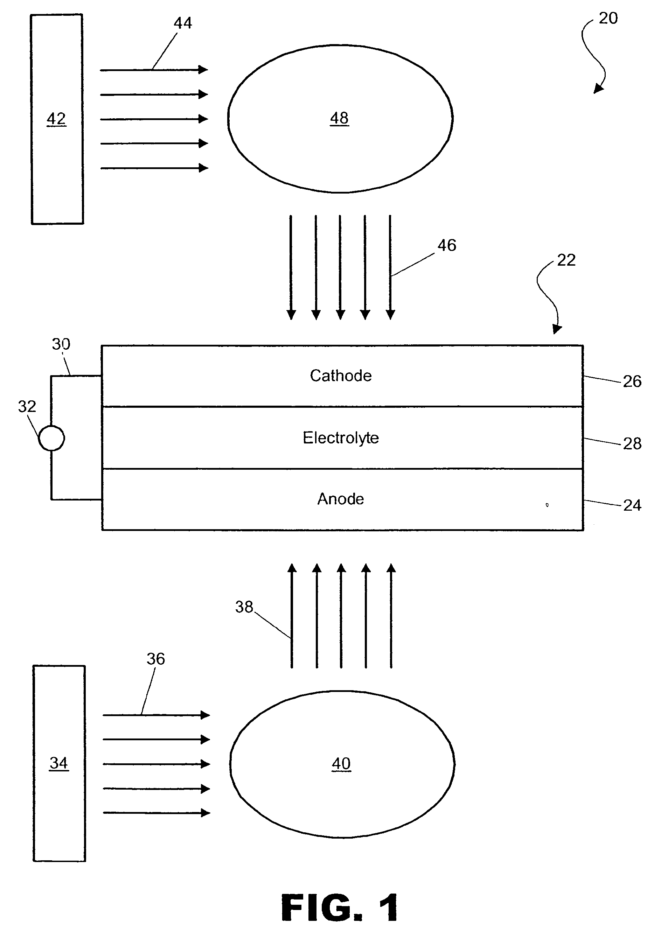

Turning now to the figures, and in particular to FIG. 1, a fuel cell system (20) according to one embodiment of the present invention is represented. According to the embodiment of FIG. 1, there is a fuel cell (22) including an anode (24), a cathode (26), and an electrolyte (28). The electrolyte (28) is disposed between the anode (24) and the cathode (26). The electrolyte (28) of the present embodiment is a solid oxide membrane. However, other electrolytes including, but not limited to, a proton exchange membrane, an alkaline membrane, a phosphoric-acid membrane, or a molten carbonate membrane may also be used. An external circuit (30) is connected between the anode (24) and the cathode (26) to conduct electrons and provide power to a load (32). The load (32) may include, for example, a power unit for an automobile, a power supply for home use, or other electrical load.

The cathode (26) is arranged in fluid communication with an oxygen source (42). In some embodiments, the oxygen source is ambient air, but this is not necessarily so. Other oxygen sources including pure oxygen tanks may also be used. The oxygen contained by the oxygen source (42) follows an oxygen path represented by two sets of arrows (44 and 46) to the cathode (26) when the fuel cell (22) is in operation. A first plasma reactor (48) is disposed in the oxygen path between the cathode (26) and the oxygen source (42) according to the embodiment shown in FIG. 1. The first plasma reactor or generator (48) may be attached to the fuel cell (22) adjacent the cathode (26).

Similarly, the anode (24) is arranged in fluid communication with a fuel source (34). In the present embodiment, the fuel source (34) is a supply of hydrocarbons for use with the solid oxide fuel cell (22). However, other fuels, including, but not limited to, hydrogen and alcohols, may also comprise the fuel source (34). The fuel contained by the fuel source (34) follows a fuel path represented by two sets of arrows (36 and 38) to the anode (24) when the fuel cell (22) is in operation.

In the present embodiment, a second plasma reactor (40) is preferably disposed in the fuel path between the anode (24) and the fuel source (34). In some embodiments, however, the second plasma reactor (40) is omitted. In other embodiments, the second plasma reactor (40) is the only plasma reactor and the first plasma reactor (48) is omitted. The second plasma reactor or generator (40) may be attached to the fuel cell (22) adjacent the anode (24) of the fuel cell (22).

The first and second plasma reactors (48 and 40) are used to create an electric field. The electric field at each reactor (48 and 40) results in a plasma through which the oxygen and fuel flow, respectively. These plasmas are used to advantageously activate the fuel and oxygen molecules flowing from the fuel and oxygen sources (34 and 42, respectively) prior to the introduction of the fuel to the anode (24) and the oxygen to the cathode (26).

A plasma is a gas to which a specific amount of energy has been added to separate the gas component molecules into a collection of ions, electrons, charge-neutral gas molecules, and other species in varying degrees of excitation. Depending on the amount of energy added the resulting plasma is characterized as thermal or non-thermal.

In a thermal plasma, there is enough energy introduced such that the plasma constituents are in thermal equilibrium. That is to say, the ions and electrons are, on average, at about the same temperature. For example, an electrical arc is a thermal plasma. According to some embodiments of the present invention, the first and second plasma reactors (48 and 40) create thermal plasmas through which the fuel and oxygen flow respectively. However, it is desirable to ensure that the added efficiency to the fuel cell (22) by activating fuel and/or oxygen molecules with the plasmas outweighs the amount of energy added to the oxygen and fuel by the first and second plasma reactors (48 and 40).

On the other hand, a non-thermal plasma is one in which the mean electron energy, or temperature, is considerably higher than that of the bulk-gas molecules. Because energy is added to the electrons instead of the ions and background gas molecules, the electrons can attain energies ranging from 1-10 eV, while the background gas remains at ambient temperature. This non-thermal condition can be created at both atmospheric and sub-atmospheric pressures. Because the electrons are preferentially excited in a non-thermal plasma, leaving the more massive ions with lower energy, a significant energy savings can be realized. Therefore, according to some embodiments of the present invention, the plasma reactors (40 and 48) generate non-thermal plasmas by applying an electric field on the order of 10⁶ V/cm. The use of non-thermal plasmas may more readily facilitate enhanced fuel cell reactions with lower parasitic losses as compared to the use of thermal plasmas. In addition, the use of a non-thermal plasmas advantageously allows the fuel cell (22) to operate at high efficiencies and lower temperatures than previously possible with conventional fuel cells.

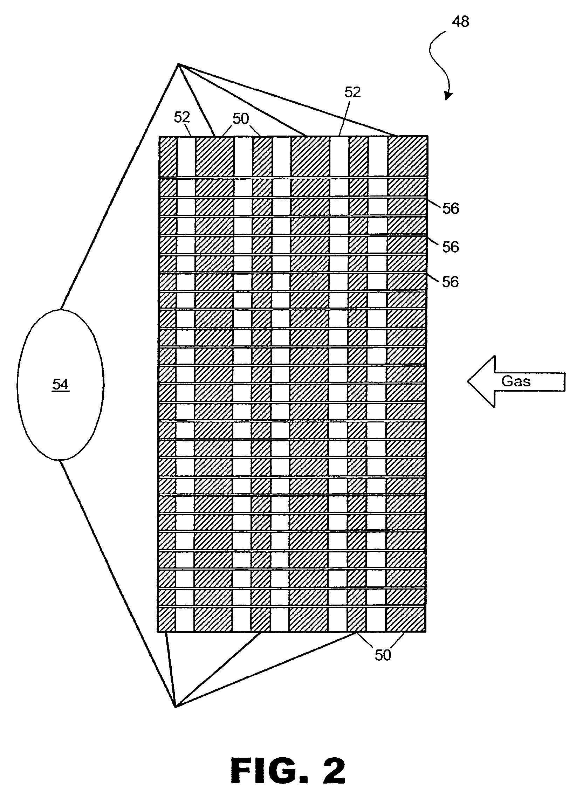

The first (and second) plasma reactor (48) may include a number of different structures. In addition, the plasma may be formed according to one of many methods including, but not limited to: concentric cylinder and planar dielectric barrier, pulsed corona, e-beam, hollow cathode, electron cyclotron resonance, helicon, helical resonator, inductively/transformer-coupled, plasmatron, plasma torch, and flow discharge. For example, according to the embodiment of FIG. 2, the first plasma reactor (48) may comprise concentric cylinders or electrodes (50) separated by planar dielectric barriers (52). The dielectric barriers of the present embodiment are solid, such as porcelain or other ceramic, mica, glass, or various metal oxides such as alumina. In some embodiments, however, the dielectric may be liquids or gases such as dry air or distilled water. The choice of dielectric material may be related to the energy needed to create a plasma sufficient to catalyze the fuel cell fuel and oxygen sources (34 and 42, FIG. 1).

If the voltage across a dielectric material becomes too great in a high-dielectric-constant substance such as aluminum oxide, the material will suddenly begin to conduct current. This phenomenon is called dielectric breakdown and results in permanent damage to the dielectric if the dielectric is a solid material. Therefore, if the voltage needed to create a sufficient plasma is high, the dielectric may need to be a vacuum, dry air, or other material that will not experience dielectric breakdown. Further, it will be understood by those of skill in the art having the benefit of this disclosure that the number of electrodes (50) may vary according to the application, and need not be limited to the three pairs shown in FIG. 2. In some embodiments there may be more than three or fewer than three.

The electrodes (50) and dielectrics (52) are arranged in a stack or support structure as shown in FIG. 2. The plasma reactor (48) may be any convenient shape, including, but not limited to, round, cylindrical, rectangular, and cubic. Further, the plasma reactor (48) of FIG. 2 may include a plurality of holes such as micro-sized holes (56) that allow the passage of gas therethrough. The micro-sized holes (56) may be drilled, punched, laser-cut, or otherwise formed in the plasma reactor (48). The micro-sized holes (56) may range in size from a few microns to several hundred microns or larger depending on the gas through-put needed, the acceptable pressure loss as the gas passes through the plasma reactor (48), the type of fuel or oxygen source used, and/or other factors.

The electrodes (50) are electrically connected to a voltage source (54) for applying a voltage across the electrodes (50). The voltage source (54) is commercially available from a variety of sources and may be an AC (alternating current), DC (direct current), or RF (radio frequency) voltage source. The voltage across the electrodes (50) may be adjusted to provide a non-thermal plasma sufficient to activate the fuel and oxygen into more reactive components as the fuel and oxygen pass through the micro-sized holes (56). The activation of the fuel and/or oxygen may include dissociating and/or ionizing fuel and oxygen molecules.

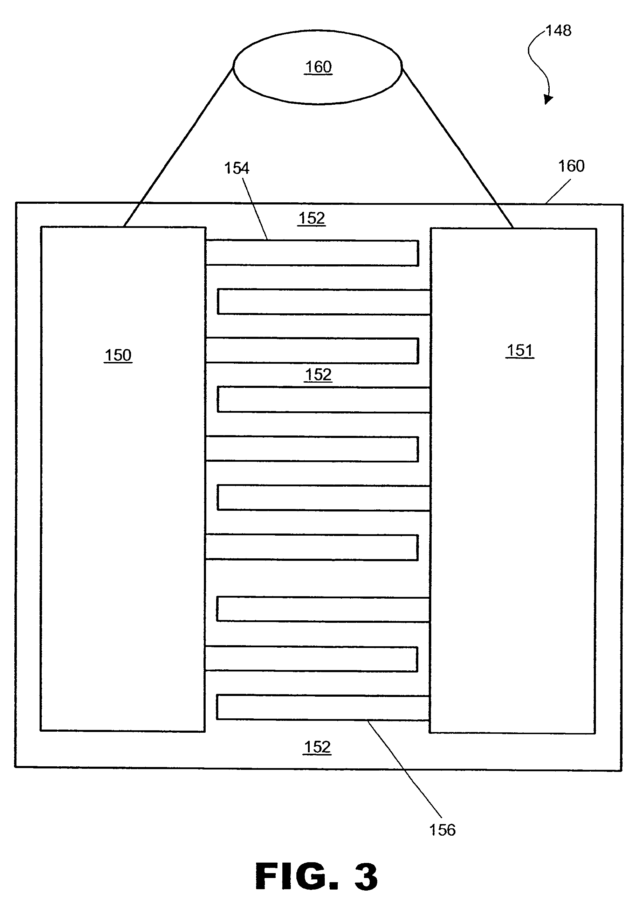

Turning next to FIG. 3, another embodiment of a first plasma reactor (148) is shown. As with the embodiment of FIG. 2, the first plasma reactor (148) shown in FIG. 3 may be similar or identical to the second plasma reactor (40, FIG. 1) represented in FIG. 1. According to the embodiment of FIG. 3, however, the plasma reactor (148) may be planar. The plasma reactor (148) includes a pair of electrodes (150 and 151), each having a plurality of arms extending toward one another. That is, the first electrode (150) has a first set of arms (154) extending toward the second electrode (151), and the second electrode (151) has a second set of arms (156) extending toward the first electrode (150).

The first and second electrodes (150 and 151), as well as the first and second sets of arms (154 and 156) are separated from one another by a dielectric (152). Similar to the dielectric barriers (52) of FIG. 2, the dielectric (152) of the present embodiment may or may not be solid. The dielectric (152) may include materials such as porcelain or other ceramic, mica, glass, or various metal oxides such as alumina. In some embodiments, however, the dielectric may be liquids or gases such dry air or distilled water. The choice of dielectric material may be at least partially dependant on the energy needed to create a plasma sufficient to catalyze the fuel cell fuel and oxygen sources (34 and 42, FIG. 1).

According to the embodiment of FIG. 3, the dielectric material (152) may also extend around a perimeter (160) of the electrodes (150 and 151). Therefore, the dielectric (152) may provide a support structure for the plasma reactor (148). As mentioned above, the plasma reactor (148) of FIG. 3 is in a planar arrangement. Accordingly, several of the reactors (148) may be stacked together and placed in the fuel and oxygen flow paths (36/38 and 44/46, FIG. 1). If several reactors (148) are placed in the fuel and oxygen flow paths (36/38 and 44/46, FIG. 1), a gap between reactors (148) is introduced to provide spacing through which the gas and oxygen can flow. However, in some embodiments there may be only a single plasma reactor (148) disposed in each of the fuel and/or oxygen flow paths (36/38 and 44/46, FIG. 1). In embodiments with a single plasma reactor (148) in one or both of the fuel and/or oxygen flow paths (36/38 and 44/46, FIG. 1), the flow of fuel and/or oxygen simply passes around and/or through the plasma reactor (148), becoming activated by the plasma created between the electrodes (150 and 151).

The plasma reactor (148) also includes a voltage source (160) similar or identical to the voltage source (54, FIG. 2) of the embodiment of FIG. 2. The voltage source (160) is electrically connected between the electrodes (150 and 151) to apply a voltage across the electrode (150 and 151). Again, the voltage source (160) may be AC, DC, or RF. The voltage source (160) may also be adjustable depending on the flow of fuel and/or oxygen.

The use of a first plasma created by the first plasma reactors (48/148) may be particularly useful for treating an incoming fuel stream for a solid oxide fuel cell according embodiments of the present invention. The treatment of the fuel for a solid oxide fuel cell by a plasma field advantageously creates ions that will more readily react at the anode of a solid oxide fuel cell. Solid oxide fuel cells, however, are not prone to carbon monoxide production like many PEM fuel cells are. While there may have been some use of plasmas with engine exhaust streams to reduce nitrogen oxides and particulate emissions, plasmas have not been used prior to the present invention for solid oxide fuel cells, nor would one skilled in the art without the benefit of the present disclosure be motivated to do so when there is no problem with carbon monoxide formation for SOFCs.

Operation of the fuel cell (22) to produce energy (a useful electrical current) according the embodiment above may be described as follows with reference to FIGs. 1-3. Oxygen from the oxygen supply source (42) may pass through a first plasma created by the first plasma reactor (48) and to the cathode (26). The plasma may be created by applying a voltage across pairs of electrodes separated by dielectric barriers. The first plasma reactor (48) may be representative of a plurality of similar or identical plasma reactors that may, for example, be arranged in series. The plasma activates the oxygen by dissociating, ionizing, etc., the oxygen molecules. The activated oxygen molecules continue along the path represented by arrows (46) to the fuel cell cathode (26).

If two plasma reactors are used, the fuel molecules may be passed through a second plasma created by the second plasma reactor (40). However, in some embodiments the second plasma reactor (40) may be omitted. As with the oxygen, the fuel is activated as it passes through the second plasma, causing the fuel molecules to dissociate, ionize, etc. The activated fuel molecules continue along the path represented by the arrow (38) to the fuel cell anode (24). The activated fuel and oxygen are highly reactive, and as they reach the anode (24) and cathode (26), respectively, they readily react as described above. Electrons from the fuel, which may not pass through the electrolyte (28), are directed to the external circuit (30) to create a useful electrical current.

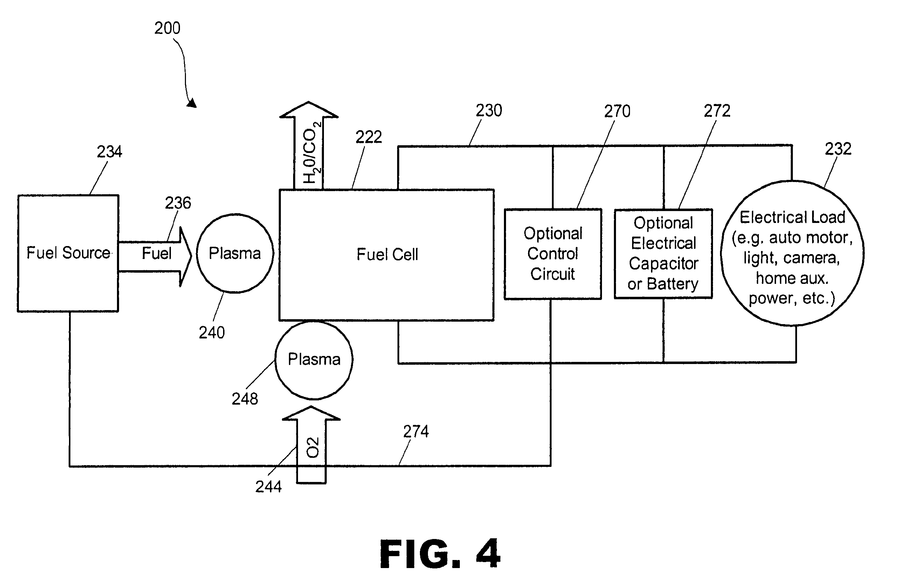

Referring next to FIG. 4, an electrical device (200) according to an embodiment of the present invention is disclosed. FIG. 4 represents in schematic format an overview of the electronic device (200) using a fuel cell power system such as the ones described above with reference to FIGS. 1-3. According to the embodiment of FIG. 4, there is a fuel cell (222) in fluid communication with a fuel source, (234). The fuel source (234) provides a supply of fuel along a path represented by an arrow (236). A supply of oxygen (that may be provided by ambient air) is also in fluid communication with the fuel cell (222) as represented by another arrow (244). As shown in FIG. 4, water (H₂O) and carbon dioxide (CO₂) may be produced as a byproduct of the operation of the fuel cell (222).

The fuel cell (222) may provide power via an external circuit (230) to an electrical load (232). The electrical load (232) may include any electrically operated device including, but not limited to: an automobile motor (and other automotive electronics), a light, a camera, a home auxiliary power unit, or other devices consuming electricity. The external circuit (230) may also be connected to an optional voltage regulator/control circuit (270) and an electrical capacitor or battery (272), which are shown in electrical parallel with the fuel cell (222). The optional voltage regulator/control circuit (270) may include a feedback loop (274) for providing data to the fuel source (234). The electrical capacitor or battery (272) may provide auxiliary power to the electrical load (232).

Along the path (244) of the oxygen from the oxygen source to the fuel cell (222) is a first plasma reactor (248). The first plasma reactor (248) creates a plasma for activating and/or ionizing the oxygen from the oxygen source. According to the embodiment of FIG. 4, the first plasma reactor (248) is located just upstream from the fuel cell (222). The location of the plasma reactor (248) may be just a few millimeters to a few decimeters upstream of the fuel cell (222). However, as the first plasma reactor (248) is arranged closer to the fuel cell (222) the types of recombinative reactions that can occur are limited and ultimately allow for lower temperature operation of the fuel cell (222). The first plasma reactor (248) can create a plasma that activates the oxygen from the oxygen source (234) to a level at which the oxygen remains activated for a significant distance, (perhaps a few decimeters or more). However, according the present embodiment the first plasma reactor (248) is only a few centimeters from the fuel cell (222) and advantageously activates the oxygen with a non-thermal plasma at low temperatures (below 500°C). The plasma consumes less power the closer the plasma reactor (248) is to the fuel cell (222) because the activated oxygen need only stay activated until it reaches and reacts at an anode of the fuel cell (222).

Similarly, the electronic device (200) may include an optional second plasma reactor (240) for activating fuel flowing along the fuel path (236) from the fuel source (234). As with the first plasma reactor (248), the second plasma reactor (240) may be located upstream of the fuel cell (222) by a few millimeters to a few decimeters. Again, however, the closer the second plasma reactor (240) is to the fuel cell (222), the less parasitic power is needed to operate the second plasma reactor (240), and the cooler the fuel cell (222) operating temperature. Accordingly, the second plasma reactor (240) of the present embodiment is located just a few centimeters upstream from the fuel cell (222). The first and second plasma reactors (248 and 240) may include the arrangements shown in FIGS. 2 and 3, or they may be commercially available plasma reactors including, but not limited to: pulsed corona, e-beam, hollow cathode, electron cyclotron resonance, helicon, helical resonator, inductively/transformer-coupled, plasmatron, plasma torch, or flow discharge reactors.

The preceding description has been presented only to illustrate and describe embodiments of invention. It is not intended to be exhaustive or to limit the invention to any precise form disclosed. Many modifications and variations are possible in light of the above teaching.

The foregoing embodiments were chosen and described in order to illustrate principles of the invention and some practical applications. The preceding description enables others skilled in the art to utilize the invention in various embodiments and with various modifications as are suited to the particular use contemplated. It is intended that the scope of the invention be defined by the following claims.

## Claims

1. A fuel cell (22) comprising:
an anode (24);
a cathode (26);
an electrolyte (28) disposed between said anode (24) and said cathode (26); and
a first plasma generator (48) attached adjacent to said cathode.

2. The system of claim 1, further comprising a second plasma generator (40) attached adjacent to said anode (24).

3. The system of claim 2, wherein said first and second plasma generators (40 and 48) generate non-thermal plasma.

4. The system of claim 2, wherein said first and second plasma generators (40 and 48) further comprise cylindrical electrodes (50) and a dielectric barrier (52) between said electrodes (50).

5. The system of claim 4, wherein said cylindrical electrodes (50) and dielectric barrier (52) are arranged in a support structure, said support structure comprising micro-size holes (56) for allowing gas passage therethrough.

6. A fuel cell system comprising:
an anode (24) in fluid communication with a fuel source (34);
a cathode (26) in fluid communication with an oxygen source (42);
a solid oxide electrolyte (28) disposed between said anode (24) and said cathode (26); and
a plasma reactor (40) disposed between said anode and said fuel source.

7. A method of operating a fuel cell (22) comprising passing fuel and oxygen through plasmas (40 and 48) and providing said fuel and oxygen to said fuel cell (22).

8. The method of claim 7, wherein said passing said fuel and oxygen through said plasmas (40 and 48) further comprises applying an electrical field of about 10⁶ V/cm to generate said plasmas (40 and 48).

9. The method of claim 7, wherein said plasmas (40 and 48) comprise non-thermal plasmas.

10. The method of claim 7, wherein said passing further comprises passing fuel and oxygen through micro-size holes (56) of plasma reactors (40 and 48) creating said plasmas.
